# EUROPEAN PATENT SPECIFICATION

(11) **EP 3 323 595 B1**
(45) Date of publication and mention of the grant of the patent: **29.01.2020**
(21) Application number: 17193938.2
(22) Date of filing: 29.09.2017
(51) Int. Cl.: B29C 64/106, B29C 64/314, B29C 70/12, C08J 9/00, B29C 70/58

(54) **MINERAL WOOL FIBER-CONTAINING PRODUCTS AND MANUFACTURING METHODS THEREOF**
MINERALWOLLEFASERHALTIGE PRODUKTE UND HERSTELLUNGSVERFAHREN DAFÜR
PRODUITS CONTENANT DES FIBRES DE LAINE MINÉRALE ET LEURS PROCÉDÉS DE FABRICATION

(30) Priority: 16.11.2016 FI 20165863
(43) Date of publication of application: 23.05.2018
(73) Proprietor: Paroc Group Oy, 00180 Helsinki (FI)
(72) Inventor: PURANEN, Tero, 20100 Turku (FI); VIITANEN, Eemeli, 20100 Turku (FI); LINDBERG, Pontus, 20780 Kaarina (FI); MATTILA, Hannu-Petteri, 21280 Raisio (FI)
(74) Representative: Sole, Timo

(56) References cited:
- EP-A1- 1 279 480
- GB-A- 882 296
- US-A- 4 463 039

## Description

### Object of the Invention

One object of the invention is to provide a method according to claim 1 for additive manufacturing of mineral wool fiber-containing products.

A further object of the invention is to provide a mineral wool fiber-containing product according to claim 10.

### Background and Terminology of the Invention

On a general level, the present invention relates to using Additive Manufacturing (AM) for the manufacturing insulation products containing fibers such as different kinds of mineral wool or any combinations of different types of fibers.

In this application the term "Additive Manufacturing" or simply "AM" means any of the technologies that based on a geometrical representation creates physical objects by successive addition of material.

In this application the term "Additive Manufacturing" or simply "AM" includes technologies that build physical 3D objects or geometries by successive addition of material according to the additive shaping principle from 3D model data, usually layer upon layer, as opposed to subtractive manufacturing and formative manufacturing methods.

The general principles and terminology of additive manufacturing are described in the standard ISO/ASTM 52900:2015.

The present invention involves the use of a foam. In this application the term "foam" shall mean a dispersion in which a large proportion of gas by volume in the form of gas bubbles is dispersed in a liquid, solid or gel. This definition is given in IUPAC's (International Union of Pure and Applied Chemistry) "Gold Book".

The term "foam base" used in this application shall be understood as a general term for the above mentioned liquid, solid or gel in a foam.

### Prior Art

International publication WO 2014/080084 A2 discloses a moldable fibrous product, comprising foam-formed fibrous material selected from fibrous webs, paper webs, board webs, or sheets cut from any of said webs, at least one polymer selected from carbohydrate derivatives, polylactic acid, polyurethane and polyolefins impregnated in the web, and from 0.001 to 0.1% by weight of at least one foaming agent. WO 2014/080084 A2 also discloses a method for the manufacture of the moldable fibrous product. The method comprises the steps of forming at least one foamed dispersion by dispersing fibers in a foamable liquid comprising water and at least one foaming agent, conveying the foamed dispersion or dispersions to a foraminous support and draining liquid trough the foraminous support to form a web or a sheet, whereby the draining is carried out with the aid of vacuum or by gravitational filtration, and impregnating at least part of the web or sheet with a liquid comprising at least one polymer to obtain the moldable fibrous product. WO 2014/080084 A2 further discloses that the fibrous material used may be formed from plant derived (natural fibers) or synthetic fibers, or any combinations thereof. It does not mention the use of mineral fibers which constitute a separate group of fibers, which are totally different from the above mentioned fibers. The method described in WO 2014/080084 A2 is a type of formative manufacturing, and it is not suitable for additive manufacturing.

International publication WO 2012/168563 A2 also relates to formative manufacturing and discloses a process for a natural fiber composite material manufacturing, products obtained and methods of application thereof. In the disclosed process a composite blend prepared from a defibered fibrous feedstock is foamed and then shaped. The shaping means disclosed are casting into forms, press-casting, roller pressing with optional heating, layer-by-layer lamination, calendaring, extrusion, injection or compression molding, air blowing into frame, and pelletization.

The fibrous feedstock utilized in WO 2012/168563 A2 comprises of wood- and mineral fibers, in particular of outer bark, recycled paper and stone wool; a bonding agent, preferably water glass, a foaming agent, preferably sodium lauryl sulfate, and additives, preferably calcium carbonate, slag, pine tree bark as mold-preventing agent and Xylan as hydrophobic agent. The composite material manufactured from wood and mineral fibers according to the process of WO 2012/168563 A2 possesses thermal insulating properties and may be used as thermal insulation for construction panels.

The presentation "New high volume fibre products by foam forming: thermal insulation and sound absorption materials" written by Tiina Pöhler, Elina Pääkkönen, Petri Jetsu at VTT Technical Research Centre of Finland, dated 06.11.2013 and published on the website of CEPI, the Confederation of European Paper Industries (cf. "http://www.cepi.org/system/files/public/epw-presentations/2013/Pohler.pdf") discloses foam forming of fibre products for the use as thermal insulation and sound absorption materials. Raw materials disclosed are mechanical pulps; Chemical pulps; Fillers; Nanofibrillated cellulose; Regenerated cellulose fibers. These are all natural fibers; mineral fibers are not used in the disclosed foam forming. The foam disclosed consists of water, foaming agent and air. SDS (sodium dodecyl sulfate) was used as surfactant. The presentation mentions the possibility to replace materials based on synthetic and glass fibres, even foamed plastics. The type of manufacturing disclosed in this presentation is formative manufacturing (cf. figures on slide 6). The use of AM or 3D printing is not disclosed in the presentation.

Publication GB 882296A, published in 1961, discloses a composite foam and mineral product and formative manufacturing methods for producing same. GB 882296A discloses a method of producing a composite structure of fibrous vitreous mineral material and set foamed material comprising the step of bringing settable, foamable material into association with a mass of fibrous vitreous mineral material intermeshed and/or bonded to an extent such that the mass has bodily integrity and causing the foamable material to foam inside and throughout the mass of fibrous material, and then causing the foam to set. The foaming and setting of the foamable material inside and throughout the mass of fibrous material may either be performed in a closed mould our in a partly enclosed space between two conveyors. The foamable material is a binder that remains bonded to the individual fibers in the composite after setting thereof.

Publication US 4463039 A discloses a composition comprising mineral wool and polyolefin fibers. The composition is adaptable for spraying onto a ceiling or wall or the like to form a textured acoustical coating.

Publication EP 1279480 A1 discloses an apparatus for creating three-dimensional objects by solidifying a liquid material which is sprayed, hardened and made to adhere. The gas dispenser of the apparatus is adapted to produce both foaming and non-foaming materials in a foamed state.

None of the prior art publications discussed provide a solution for utilizing additive manufacturing or 3D printing by using mineral fibers as a raw material. There is however increasing demand for being able to manufacture mineral fiber products without waste of raw material and with better three-dimensional fit, particularly for products of complex shape and/or relatively small size. At present, products of complex shape are manufactured by formative manufacturing methods, such as cutting out the product from a larger block of cured mineral fiber. Such cutting is in many occasions done manually and the quality of the fit of such a complex product is dependent on the skills of the person doing the cutting, but also depends on the tool used. In many cases the tool used cannot always give a precise fit. Consequently, it would be of high ecological and economical interest to be able to utilize additive manufacturing or 3D printing in the manufacturing of mineral fiber-based products.

### Description of the Invention

For the purpose of eliminating the drawbacks with the conventional methods for manufacturing mineral wool fiber based products, such as in particular mineral wool fiber based products of complex shape, the method of the invention for additive manufacturing of mineral wool fiber-containing products has the features as defined in independent claim 1.

The features of the preferred embodiments of the method of the invention for additive manufacturing are defined in the dependent claims of this application.

According to one of the preferred embodiments, the fibers used are mineral wool fibers that e.g. may be in the form of virgin mineral wool fibers and/or non-virgin mineral wool fibers optionally in combination with longer glass fibers, organic polymer fibers or any mixtures thereof. Non-virgin mineral wool contains binder in cured form and may be process waste or recycled material from outside of own process.

The shapeable foam-based mixture is defined as comprising fibers and at least one binder in a shapeable foam comprising a base, at least one foaming agent and gas as its components, said fibers comprising at least mineral fibers.

The features of the preferred embodiments of the shapeable foam-based mixture are defined below:
- The shapeable foam-based mixture, wherein the fibers used are stone wool fibers, e.g. in the form of virgin stone wool fibers and/or recycled stone wool fibers (with cured binder), optionally in combination with longer glass fibers, organic polymer fibers or any mixtures thereof.
- The shapeable foam-based mixture, wherein the fibers and the at least one binder are dispersed in the foam in powder form.
- The shapeable foam-based mixture, wherein the at least one binder is a phenol formaldehyde resin, or a formaldehyde free binder or a combination of the aforementioned.
- The shapeable foam-based mixture, further comprising one or more additives such as fire retardants, reflective particles or compounds, aerogels, or any other suitable additives.
- The shapeable foam-based mixture, which comprises stone wool fibers having a length of at least 0.5 mm, preferably from 1 mm to 5 mm, most preferably from 1 mm to 3 mm, and a thickness of 1 to 10 µm, preferably from 3 to 6 µm, the average thickness of the fibers being in the range of 3 to 5 µm phenol formaldehyde resin in powder form as the at least one binder, preferably in an amount of 4 to 15 % by weight with respect of the total weight of binder and stone wool fibers together a shapeable foam, preferably in an amount of 30 to 60 % by weight of the total weight of binder and stone wool dust.

The invention also concerns a mineral wool fiber-containing product obtained by the method as defined in independent claim 1 or any one of its dependent claims.

The features of the preferred embodiments of the mineral wool fiber-containing product obtained by the method of the invention are defined in the dependent claims thereof.

On a general level the invention is based on producing mineral wool -based products utilizing additive manufacturing or 3D printing by using mineral fibers as a raw material. The fibers may e.g. be dispersed in oil or preferably water based foam. The foam is used in the process to create the required structure. The raw material can comprise or consist of different types of fibers, e.g. virgin stone wool fibers without binder, recycled fibers with binder, longer glass fibers, organic polymer fibers or a mixture of any of the aforesaid or any other different fibers to reach desired properties.

The main function of the shapeable foam is to create the porous structure of the product. After creation of the porous structure, the foam is actively caused to disappear at least partly from the product in the manufacturing process e.g. by evaporating and/or decomposing it with heat or any other energy source such as microwave radiation or radiation with infrared light. In other words, the shapeable foam merely acts as a carrier and is removed (or just disappears) at least partly, preferably to a major part, prior to finalization and use of the material or product.

It is possible to sieve the shots away from the material for a further weight reduction. The use of foam enables 3D-printing of e.g. low density i.e. lightweight mineral wool -based products. The mineral fibers used may be virgin or waste mineral fibers, such as mineral wool with or without organic content.

Benefits of using the shapeable foam-based mixture and the additive manufacturing method of the invention include an easily controllable way of transporting the mixture to the print area and extruding it through a nozzle with good accuracy. With these types of substance characteristics the relations of the mixture components (fibers, foam, binder etc.) can be fully managed and already existing additive manufacturing technologies and devices can be utilized.

With this new type of additive manufacturing method applied for mineral fiber - based products utilizing a variety of binders, e.g. inorganic or organic binders such as phenol resin, can be mixed easily, effectively and evenly. The state of matter of the binder is not limited to any particular state; it may be added in e.g. solid or liquid form. Also different additives can be added to the method to establish different characteristics in the end product. By adding these additives to the product just before the nozzle outlet different properties can be created only where the effect is needed. E.g. aerogels can be added to improve the thermal conductivity (lambda-values) of bulk products, reflective particles or compounds can be added to influence emissivity, or fire retardants can be added only to the surface of the product. This means that these normally expensive additives can be utilized close to 100%.

A further benefit of the invention is that new higher-value products can be developed. For instance, the invention enables new cost efficient flexible process for manufacturing e.g. low density pipe sections with possibilities to build in different layers or functions (aerogel, fire retardants) in the structure. Also, with a suitable binder system, it could be possible to manufacture piping insulation and other challenging forms on-site (directly on pipes, sort-of 3DP i.e. 3D printing). Reduction of transport costs and material loss are also achieved.

The invention may also be used for manufacturing pipe sections and other tailor made (non-bulk) high-price products. The foam may also be used for filling cavities or damages in insulation (e.g. when installing cables etc. that go through the insulation).

The manufacturing of pipe sections may also be performed in according to a formative manufacturing method by first preparing a shapeable foam-mixture comprising fibers mixed in a foam (water or oil based). This shapeable foam-mixture is then injected in a mold or extruded. Binder (e.g. resin in powder form) and other additives like fire retardants, aerogel or compounds effecting water absorption can also be added to the shapeable foam mixture or these may be added separately from the foam-mixture. Fiber structure can be controlled by having extrusion nozzle with many sections (different foam structure or amount of fiber in foam). Fiber structure, density, amount of binder and additives can by controlled in cross section so that density can be higher at surface where also for example fire retardant can be added. Similarly, there could be aerogel or lower density mineral wool in the midsection of the pipe section.

### Detailed Description

In the following is described in more detail how one may utilize the invention for manufacturing mineral wool based insulation products. This detailed description with its examples shall not be interpreted as limiting the scope of protection defined by the appended claims.

Based upon the experiments described later in this part of, the inventors found it possible to produce mineral wool products utilizing additive manufacturing or 3D printing by using fibers as a raw material. The fibers are dispersed into oil-based or water-based foam which is used in the process to create the required porous structure of the insulating material. The raw material can consist of different types of fibers, e.g. virgin stone wool fibers without binder, recycled fibers with binder, longer glass fibers, organic polymer fibers or a mixture of different fibers to reach certain properties.

The mineral wool fibers used in the following specific examples are stone wool dust. The foams used as carrier for the stone wool dust are either oil-based or water-based.

### Stone Wool Dust

Stone wool dust is a dustlike material formed from stone wool fibers at different stages of production. It contains a mix of stone wool fibers of different lengths and with different amounts of binder. A study of stone wool dust shows that it contains stone wool fibers having a density suitable for using them as raw material for insulation material. According to the study, fibers comprised in stone wool dust are shorter than the intact stone wool fibers in stone wool insulation products. The length of dust fibers varies from intact fibers of a length of a few millimeter to broken fibers of a length of approximately less than one millimeter, and their thickness is on average approximately four micrometers.

In addition to stone wool fibers and binder rests, stone wool dust contains small glass shots that are formed as byproducts in the manufacturing of the fibers (fiberizing stage). These small glass shots are granular. The mass of a glass shot is greater than that of a stone wool fiber and it therefore affects the mass and the density of the end product. The number of glass shots in the raw-material may be minimized by using e.g. some kind of sieve as a separator, to remove the shots. Removal of glass shots from stone wool dust is not a prerequisite for the functioning of the manufacturing method, but it affects the density of the end product.

### Example 1 - Use of Water-Based Foam

In this example is described how an insulation object of predetermined three-dimensional (3D) geometry was manufactured according to the invention by using direct deposition as the chosen additive manufacturing technique. The insulating fiber material of choice was stone wool dust and the binder of choice used for binding the stone wool fibers to each other in the end product was phenol formaldehyde resin in powder form. The water-based foam used as carrier for enabling carrying and direct deposition of a mixture of stone wool dust and binder, the building components of the end product, to the 3D printing or additive manufacturing area was chosen to be Rock Face (WCP.ME Ltd.) shaving cream gel.

Rock Face (WCP.ME Ltd.) shaving cream gel includes the following ingredients: aqua, palmitic acid, triethanolamine, oleth-20, isopentane, paraffinum liquidum, glycereth-26, isobutane, parfum, stearic acid, glycerin, sorbitol, menthone glycerin acetal, hydroxyethylcellulose, PEG-14, aloe barbadensis leaf juice, myristic acid, butylphenyl methylpropional, hydroxypropylcellulose, sodium benzoate, citric acid, potassium sorbate, Cl 42053, Cl 19140. Oleth-20 is a tenside.

### Step 1: Preparation of Stone Wool Dust

100 g of stone wool dust was sieved with a 1 mm sieve for about five minutes in order to remove "the big glass shots" and other undesired particles of stone wool from the mass of stone wool dust, wherein the major part of the glass shots were separated from the stone wool dust.

The glass shots are useless with respect of insulation, and therefore it was possible to reduce the mass and consequently the density of the stone wool dust to be used in the further preparations.

### Step 2: Addition of Binder to Stone Wool Dust

5 g of phenol formaldehyde resin (about 5 % by weight) in powder form as binder was added to the sieved stone wool dust by manual mixing for approximately 5 min until the mixture was smooth.

It was surprisingly found that the binder was most homogeneously mixed in the mixture when added to the stone wool dust and that it formed strong bonds between the fibers in the end product.

### Step 3: Preparation of Foam

100 g of Rock Face (WCP.ME Ltd.) shaving cream gel was foamed for approximately 5 minutes by mechanical mixing using a mixer until the foam was smooth. The proportion of the gel with respect of the mineral wool dust was 50/50 by weight.

The reason for foaming the gel prior to the addition of the mixture of stone wool dust and binder obtained in step 2 is that adding stone wool to foam provided the best results.

### Step 4: Addition of the Mixture of Stone Wool Dust and Binder to Foam

The mixture of stone wool dust and phenol formaldehyde resin prepared in step 2 was added to the foam prepared in step 3 by mechanical mixing using a mixer. The mixing was continued until the composition was smooth, which in this example was approximately five minutes.

The mixture of stone wool dust and phenol formaldehyde resin was added to the prepared foam, since the best mixture of these was obtained by addition in this specific order. The foam tore the stone wool dust fibers into a smooth mass suitable for application layer-upon-layer into desired 3D geometries.

### Step 5: Direct Deposition

A predetermined amount of the smooth mixture of stone wool dust, binder and foam obtained in step 4 was deposited by extrusion of the mixture layer-upon-layer on the printing area into a predetermined 3D geometry. Using the mixture of step 4, it was for example possible to manufacture a cylindrical object with a diameter of 100 mm and a height of 100 mm.

### Step 6: Heat Treatment

The object obtained in step 6 by direct deposition layer-upon-layer was heat treated in an oven. The heat treatment was first performed at 50 °C for approximately an hour, whereafter the temperature was raised to 200 °C. In this example with the mixture of stone wool dust, binder and foam having a ratio of 50/50 of foam (gel) to stone wool dust the density obtained for the heat treated object prepared in step 5 was approximately 60-65 kg/m³. The above heat treatment was performed for foam mixtures no. 1 to 9 in table 1.

At the lower temperature the bubble structure of the foam of the object was punctured without expansion and at the higher temperature the binder was cured and the foam was decomposed by combustion. Removal of the foam in the process affected the mass of the end product and this way also the density.

A further set of tests was performed on virgin stone wool fibers having a length distribution ranging from 0 to 10 mm and an average length of 1-2 mm, the major part of the fibers having a length in the range of from 0 to approximately 5 mm. These virgin stone wool fibers have a thickness distribution ranging from 0 to 10 µm (major part 1-8 µm) and an average thickness of 3-5 µm (length weighted mean diameter). These virgin stone wool fibers contained a minimal amount of phenol formaldehyde resin (about 0.7%). The tests and results thereof are presented in table 1 as foam mixtures no. 10, 11 and 12. The end products from foam mixtures no. 10, 11 and 12 were obtained by first heating the foam mixture at 50 °C (T1) for 45 min (t1), and then at 190 °C (T2) for 45 min (t2).

**Table 1. Using water-based foam for manufacturing stone wool insulation.**

| | **Components of shapeable foam mixtures** | | | | | **End product** |
|---|---|---|---|---|---|---|
| Foam mixture **No.** | Stone wool dust **weight** | Binder¹ **weight** | Binder **% by weight²** | Foam (gel³) **weight** | Foam (gel) % by weight⁴ | End product **density** |
| 1 | 15g | 2g | 11.76 | 10g | 40 | 74 kg/m³ |
| 2 | 50g | 3.25g | 6.10 | 50g | 50 | 65 kg/m³ |
| | | | | | | |
| 3 | 40g | 3.25g | 7.51 | 60g | 60 | 48 kg/m³ |
| | | | | | | |
| 4 | 60g | 3.25g | 5.14 | 40g | 40 | 82 kg/m³ |
| | | | | | | |
| 5 | 100g | 6.5g | 6.10 | 100g | 50 | 54 kg/m³ |
| | | | | | | |
| 6 | 15g | 1g | 6.25 | 10g | 40 | 69 kg/m³ |
| 7 | 14g | 1g | 6.67 | 8g | 36.4 | 95 kg/m³ |
| 8 | 15g | 0.75g | 4.76 | 10g | 40 | 81 kg/m³ |
| 9 | 14g | 0.75g | 4.22 | 8g | 36.4 | 100 kg/m³ |

| | **Components of shapeable foam mixtures** | | | | | **End product** |
|---|---|---|---|---|---|---|
| Foam mixture **No.** | Virgin Stone wool fibers **weight** | Binder¹ **weight** | Binder **% by weight²** | Foam (gel³) **weight** | Foam (gel) % by weight⁴ | End product⁵ **density** |
| 10 | 20g | 3g | 13 | 40g | 63 | 42 kg/m³ |
| 11 | 20g | 4g | 17 | 40g | 62 | 43 kg/m³ |
| 12 | 20g | 5g | 20 | 40g | 62 | 44 kg/m³ |

| | | | | | | |
|---|---|---|---|---|---|---|
| ¹ Phenol formaldehyde resin in powder form. ² Binder % by weight with respect of the total weight of binder and stone wool dust/fibers. ³ Rock Face (WCP.ME Ltd.) shaving cream gel. The weight given for the foamed gel is the weight of the unfoamed gel. ⁴ Foam (gel) % by weight of the total weight of binder and stone wool (dust or virgin fibers). ⁵ The end products from foam mixtures no. 10, 11 and 12 were obtained by using the following heat treatment: T1=50 °C and t1=45 min; T2=190 °C and t2=45 min. | | | | | | |

### Observations and Other Options and Embodiments of the Invention

During the experiments involving the use of a foam in additive manufacturing of stone wool dust -based insulation products it was found that
- Clodded mineral wool dust structure may be broken up mechanically using compressed air and/or rotating mixers and/or separators (e.g. screens or sieves)
- The binder should be mixed into the mineral wool dust at earliest at the stage of breaking up the mineral wool dust clods
- Mineral wool dust should be preferably added into and mixed with foam (or optionally the other way around).
- Suitable foam has small bubbles, is strong and sustains its structure for a long period of time, comprising amongst others various acids and amines. Such foams comprise cosmetic foams such as shaving foams, but are not restricted thereto.
- Solid binder should first be added into mineral wool dust by mixing, and the resulting mixture should thereafter be added to the foam by mixing.
- The obtained foam composition mixture should be applied via a nozzle into the application region via layering
- The applied/layered powder/foam mixture should be heat treated
   ∘ first at a lower temperature t₁ in order to puncture the bubble structure of the foam in an ordered way
   ∘ then at a higher temperature t₂ to cure the binder and eliminate the foam

The invention is not limited to any specific binder or form thereof. The binder may e.g. be in liquid form (e.g. solution) or in powdered form, or any combination thereof. The binder may be of any kind as long as it survives the elimination of the foam. The binder may for example be based upon starch. It may also be a liquid resin, polyvinyl alcohol, or an all-round adhesive.

Further duitable foaming agents for water-based foams include, but are not restricted to, foaming agents used in the hygienic, paper and textile industry, such as SDS (Sodium Dodecyl Sulfate), 3.3 Amadol CMA 12, Aromox C/13W, and Ampholak YCE. Alternative or additional tensides to be used instead of oleth-20 (used in the above example) in the foams of the invention include, but are not restricted to, laureth-23, sodium laureth sulfate, sodium lauryl sulfate.

In further tests, the details of which are not presented here, it was also found that the following shaving foams are useful for the invention: Gillette Fusion Gel, Gillette Classic, Gillette Foam Regular, Pirkka Gel, Pirkka Foam, and Cien Shaving Gel. The scope of the present invention is not however limited to any certain shaving foams or gels. It is our understanding that any foaming commercial shaving foam or gel will be useful for the invention.

## Claims

1. Method for 3D printing mineral wool fiber-containing products of predetermined three-dimensional (3D) geometry by successive addition of material according to the additive shaping principle from 3D model data, involving performing each of the following method steps:
• forming a shapeable mixture comprising mineral wool fibers and at least one binder mixed in a shapeable foam comprising water as a base, at least one foaming agent and gas as its components;
• applying the shapeable mixture comprising mineral wool fibers and at least one binder mixed in said shapeable foam via a nozzle into the application region layer-by-layer;
• curing or drying at least one of the layers to form a mineral wool fiber-containing intermediate product of predetermined shape by curing or drying the at least one binder of said shapeable mixture,
wherein the method further comprises the step of causing the shapeable foam to at least partly, preferably by at least 80 %, more preferably by at least 90 %, and most preferably by at least 98 % by weight thereof disappear from the mineral wool fiber-containing intermediate product, the step being performed thermally by heating the mineral wool fiber-containing intermediate product to a temperature high enough for eliminating the foam and its components by vaporization, burning, and/or decomposition or any combinations thereof, but low enough to avoid decomposition of the at least one binder.

2. Method according to claim 1, wherein the mineral wool fibers are e.g. in the form of virgin mineral wool fibers and/or non-virgin mineral wool fibers optionally in combination with longer glass fibers, organic polymer fibers or any mixtures thereof.

3. Method according to claim 1 or 2, wherein the fibers are dispersed in the shapeable foam.

4. Method according to any one of the claims 1-3, wherein the at least one binder is a solid binder in powder form.

5. Method according to claim 4, wherein the solid binder is phenol formaldehyde resin in powder form.

6. Method according to claim 4 or 5, wherein the fibers are combined with the solid binder by mixing, whereafter the resulting mixture is dispersed in the foam.

7. Method according to any one of the claims 1-3, wherein the at least one binder is a liquid binder.

8. Method according to claim 7, wherein the liquid binder is first mixed into the foam whereafter the fibers are dispersed in the foam (foam-binder) mixture.

9. Method according to any one of the previous claims, wherein the curing of the at least one binder is performed by thermal heating, microwave radiation, or radiation with infrared light (IR), or any combination of these, of the fiber-containing intermediate product of predetermined shape.

10. A mineral wool fiber-containing product obtained by the method as defined in any one of the claims 1-9.

11. A mineral fiber-containing product according to claim 10, having a density in the range of at least 40 kg/m³, preferably in the range of 40 kg/m³ to 100 kg/m³.

## Patentansprüche

1. Verfahren zum 3D-Drucken von Mineralwollefaser enthaltenden Produkten vorgegebener dreidimensionaler (3D-)Geometrie durch sukzessives Hinzufügen von Material nach dem additiven Formprinzip aus 3D-Modelldaten, wobei jeder der folgenden Verfahrensschritte durchgeführt wird:
• Bilden einer formbaren Mischung, umfassend Mineralwollefasern und mindestens ein Bindemittel, das in einen formbaren Schaumstoff gemischt ist, der Wasser als Basis, mindestens ein Schaummittel und Gas als Komponenten umfasst;
• Auftragen der formbaren Mischung, die Mineralwollefasern und mindestens ein Bindemittel umfasst, das in den formbaren Schaum über eine Düse in den Anwendungsbereich Schicht für Schicht gemischt ist;
• Härten oder Trocknen mindestens einer der Schichten, um ein Mineralwollefaser enthaltendes Zwischenprodukt mit vorgegebener Form zu bilden, durch Härten oder Trocknen des mindestens einen Bindemittels der formbaren Mischung,
wobei das Verfahren ferner den Schritt umfasst, den formbaren Schaum zumindest teilweise, vorzugsweise um mindestens 80 %, besser um mindestens 90 % und am besten um mindestens 98 Gew.-% davon aus dem Mineralwollefaser enthaltenden Zwischenprodukt verschwinden zu lassen, wobei der Schritt thermisch durch Erwärmen des Mineralwollefaser enthaltenden Zwischenprodukts auf eine Temperatur durchgeführt wird, die hoch genug ist, um den Schaum und seine Komponenten durch Verdampfen, Brennen und/oder Zersetzen oder beliebige Kombinationen derselben zu beseitigen, aber niedrig genug, um eine Zersetzung des mindestens einen Bindemittels zu vermeiden.

2. Verfahren nach Anspruch 1, wobei die Mineralwollefasern z.B. in Form von reinen Mineralwollefasern und/oder nicht reinen Mineralwollefasern, gegebenenfalls in Kombination mit längeren Glasfasern, organischen Polymerfasern oder deren Mischungen, vorliegen.

3. Verfahren nach Anspruch 1 oder 2, wobei die Fasern in dem formbaren Schaum dispergiert werden.

4. Verfahren nach einem der Ansprüche 1-3, wobei das mindestens eine Bindemittel ein festes Bindemittel in Pulverform ist.

5. Verfahren nach Anspruch 4, worin das feste Bindemittel Phenolformaldehydharz in Pulverform ist.

6. Verfahren nach Anspruch 4 oder 5, wobei die Fasern mit dem festen Bindemittel durch Mischen kombiniert werden, wonach die resultierende Mischung im Schaum dispergiert wird.

7. Verfahren nach einem der Ansprüche 1-3, wobei das mindestens eine Bindemittel ein flüssiges Bindemittel ist.

8. Verfahren nach Anspruch 7, wobei das flüssige Bindemittel zunächst in den Schaum eingemischt wird, wonach die Fasern in der Schaumstoff-(Schaumbindemittel)-Mischung dispergiert werden.

9. Verfahren nach einem der vorhergehenden Ansprüche, wobei das Aushärten des mindestens einen Bindemittels des faserhaltigen Zwischenprodukts mit vorgegebener Form durch thermisches Erwärmen, Mikrowellenstrahlung oder Strahlung mit Infrarotlicht (IR) oder einer beliebigen Kombination derselben durchgeführt wird.

10. Mineralwollefaserhaltiges Produkt, erhalten nach dem Verfahren, wie in einem der Ansprüche 1-9 definiert.

11. Mineralfaserhaltiges Produkt nach Anspruch 10 mit einer Dichte im Bereich von mindestens 40 kg/m³, vorzugsweise im Bereich von 40 kg/m³ bis 100 kg/m³.

## Revendications

1. Procédé d'impression 3D de produits contenant de la fibre de laine minérale de géométrie tridimensionnelle (3D) prédéterminée par additions successive de matériau suivant le principe de façonnage additif de données de modèles 3D, comprenant la réalisation de chacune des étapes opératoires suivantes :
• formage d'un mélange malléable comprenant des fibres de laine minérale et au moins un liant mélangé à une mousse malléable contenant de l'eau comme base, au moins un agent moussant et du gaz en tant que composants ;
• application du mélange malléable contenant des fibres de laine minérale et au moins un liant mélangé à ladite mousse malléable via une buse dans la zone d'application couche par couche ;
• durcissement ou séchage d'au moins une des couches pour former un produit intermédiaire contenant de la fibre de laine minérale de forme prédéterminée par durcissement ou séchage de l'au moins un liant dudit mélange malléable,
le procédé comprenant en outre l'étape consistant à amener la mousse malléable à disparaître au moins partiellement, de préférence à au moins 80 %, plus préférentiellement à au moins 90 %, et le plus préférentiellement à au moins 98 % en poids du produit intermédiaire contenant de la laine minérale, cet étape étant réalisée thermiquement en chauffant le produit intermédiaire contenant de la laine minérale à une température assez élevée pour éliminer la mousse et ses composants par vaporisation, brûlage, et/décomposition ou leurs combinaisons mais assez basse pour éviter la décomposition de l'au moins un liant.

2. Procédé selon la revendication 1, dans lequel les fibres de laine minérale se présentent par exemple sous la forme de fibres de laine minérale vierge et/ou de fibres de laine minérale non vierge, en option combinées avec des fibres de verre, des fibres de polymères organiques plus longues ou leurs mélanges.

3. Procédé selon la revendication 1 ou 2, dans lequel les fibres sont dispersées dans la mousse malléable.

4. Procédé selon l'une quelconque des revendications 1 à 3, dans lequel l'au moins un liant est un liant solide sous forme de poudre.

5. Procédé selon la revendication 4, dans lequel le liant solide est de la résine de phénol formaldéhyde sous forme de poudre.

6. Procédé selon la revendication 4 ou 5, dans lequel les filles sont combinées au liant solide par mélange, après quoi le mélange résultant est dispersé dans la mousse.

7. Procédé selon l'une quelconque des revendications 1 à 3, dans lequel l'au moins un liant est un liant liquide.

8. Procédé selon la revendication 7, dans lequel le liant liquide est d'abord mélangé à la mousse, après quoi les fibres sont dispersées dans la mousse (mousse-liant) .

9. Procédé selon une des revendications précédentes, dans lequel le durcissement de l'au moins un liant est réalisé par chauffage thermique, irradiation aux micro-ondes, ou irradiation à la lumière infrarouge (IR) ou toutes leurs combinaisons du produit intermédiaire contenant des fibres de forme prédéterminée.

10. Produit contenant des fibres de laine minérale obtenue par le procédé selon l'une quelconque des revendications 1 à 9.

11. Produit contenant des fibres de laine minérale selon la revendication 10, ayant une densité de l'ordre d'au moins 40 kg/m³, de préférence de l'ordre de 40 kg/m³ à 100 kg/m³.
